# EUROPEAN PATENT SPECIFICATION

(11) **EP 2 803 448 B1**
(45) Date of publication and mention of the grant of the patent: **09.01.2019**
(21) Application number: 14168121.3
(22) Date of filing: 13.05.2014
(51) Int. Cl.: B25D 11/12, F16C 11/06, F16H 21/18, F16H 21/22

(54) **A Crank Mechanism**
Kurbelmechanismus
Mécanisme de manivelle

(30) Priority: 16.05.2013 GB 201308858; 21.05.2013 GB 201309146
(43) Date of publication of application: 19.11.2014
(73) Proprietor: Black & Decker Inc., Newark, Delaware 19711 (US)
(72) Inventor: Arich, Klaus-Dieter, 65510 Hünstetten-Beuerbach (DE); Rompel, Markus, 65594 Runkel / Schadeck (DE); Benner, Erhard, 56479 Talweg 5 (DE)
(74) Representative: SBD IPAdmin

(56) References cited:
- US-A- 2 478 660
- US-A- 3 871 782
- US-A- 4 436 163

## Description

The present invention relates to hammer drill and in particular to a piston drive for a hammer drill comprising a crank mechanism.

EP1674213 describes a number of designs of a hammer drill. In one of the designs, which is described with reference to Figures 9 and 10 of EP1674213 and which is utilized in a commercially available product, a crank plate 152 (using the same reference numbers as those used in EP1674213) drives a hollow piston 58. The crank plate 152 comprises a cup shaped recess 172 in which is located a part spherical bearing 170 of a crank pin 154. The crank pin 154 drives the hollow piston 58 as described in EP1674213. A spring 176 locates between a washer 178, located adjacent the cylindrical bearing 156 of the hollow piston 58, and the part spherical bearing 170. The spring 176 biases the part spherical bearing 170 into the cup shaped recess 172 so that it is maintained within the recess 172 and is prevented from even partially moving out of engagement with the crank plate 152.

A problem has been found with this design of crank mechanism. The spring 176 exerts a sideways (vertically upwards as shown in Figure 9 of EP1674213) force onto the hollow piston 58 causing it to wear excessively on one side as it is reciprocatingly driven by crank plate 152.

An object of the present invention is to provide a crank mechanism by which the part spherical bearing is maintained within the cup shaped recess whilst avoiding or at least reducing the sideways force.

Figures 5 to 8 and 14 of US4436163 together with the associated text disclose a number of crank mechanisms where cylindrical or part spherical bearings are located within a recess of a crank plate. These crank mechanisms do not utilise a spring and as such do not exert a sideways force.

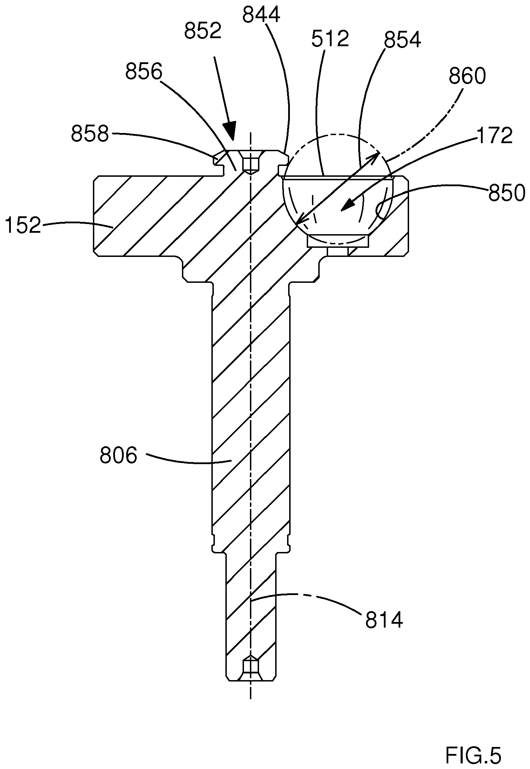

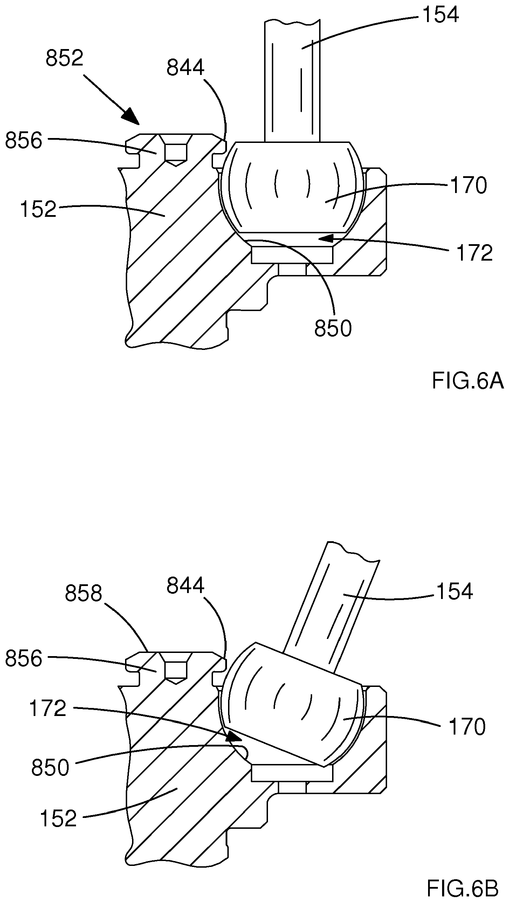

The crank mechanisms disclosed in Figures 5 to 7A and 14 of US4436163 have cylindrical or part spherical bearings which axially slide within a passageway formed either directly through the crank plate (see Figures 5, 7A and 14) or indirectly through a component part mounted within (though US4436163 fails to explain how it is possible to mount such a component part within the crank plate) the crank plate (Figure 6). This is to accommodate the increase and decrease in the relative distance between the passageway in the crank plate and the object being reciprocatingly driven as the crank plate rotates due to the crank pin being axially fixed relative to the object it is reciprocatingly driving. Such an arrangement is not desirable within a hammer drill where the crank mechanism is use to reciprocatingly drive a piston. The length of the stroke required for a piston would be such that either the length of the passage way would be considerable resulting in a crank plate having a large thickness resulting in it being excessive in weight and taking up too much space within the hammer drill, or if a thin crank plate was to be used, that the pin would need to extend through the plate and beyond resulting in the requirement for space below the plate, making the hammer drill less compact.

Figure 7B shows a crank plate which has the crank pin rigidly attached to the crank plate. The part spherical bearing, rigidly attached to the end of the crank pin remote from the crank plate, locates within a tube rigidly attached the object being reciprocatingly driven. The rotational movement of the crank plate results in the part spherical bearing sliding up and down inside of the tube as well as the longitudinal axis of the crank pin pivoting relative to that of the tube. Such an arrangement is not desirable within a hammer drill where the crank mechanism is use to reciprocatingly drive a piston. The length of the stroke required for a piston would be such that the dimensions of the tube and part spherical bearing would excessively large sin order to prevent the crank pin from engaging with the side wall of tube as it pivots relative to the tube preventing it from operating.

It is therefore desirable in hammer drills to have a crank pin which is axially fixed relative to the crank plate but which can pivot relative to the crank plate. Figure 8 of US4436163 discloses such an arrangement. The pin comprises a part spherical bearing which is held within a part spherical chamber formed within the crank plate. However, in order to assemble such a structure the crank plate has to be manufactured from two component parts with the chamber formed partly in each component part to form the whole chamber when the two component parts are attached to each other. The part spherical bearing is held sandwiched between the two component parts. This results in a structure with multiple parts and a manufacturing process which is likely to be complicated though the details of which are not disclosed.

A second object of the present invention is to provide a crank mechanism which has a crank pin which is axially fixed relative to the crank plate but which can pivot relative to the crank plate and which has a simple structure and simplified manufacturing process.

US3871782, on which the preamble of claim 1 is based, discloses a device for positively retaining a ball-shaped bearing member in a mating bearing seat.

According to a first aspect of the present invention, there is provided a crank mechanism for a hammer drill in accordance with claim 1.

The bearing can be semi spherical in shape. The bearing can have a flat surface on its top and a flat surface on its bottom. The recess can further comprise at least one other second section which is tubular in shape with a uniform circular cross section along its length and which connects to the first section and has the same diameter as the first section. A circular entry aperture formed in the wall of the crank plate into the at least one other second section.

There can be provided a rivet mounted on the crank plate having a head, part of the edge of the head forming the lip. Alternatively, the lip can be integral with the crank plate. In either case, the lip can extend to a position where its edge is adjacent the line of curvature of the wall of the first section. The bearing can be prevented from moving in a linear direction when the bearing is located and held within the recess. The bearing can be orientated within an entry range of angles within which it is able to pass through the entrance and locate within the recess. The entry range of angles between the longitudinal axis of the crank pin and the axis of rotation of the crank plate is equal to or greater than 47 degrees.

When the bearing is located within the recess, the bearing can be orientated within a locked in range of angles within which it is prevented from passing through the entrance and exiting the recess. The locked range of angles between the longitudinal axis of the crank pin and the axis of rotation of the crank plate is less than 47 degrees and preferably between 26 to 0 degrees.

According to a second aspect of the present invention, there is provided a hammer drill comprising, a housing, a tool holder capable of holding a cutting tool, a motor mounted within the housing, a piston mounted in an axially slideable manner within the housing and which is capable of being reciprocatingly driven by the motor along an axis. A ram mounted in axially slideable manner within the housing, the ram being reciprocatingly driven by the reciprocating piston via an air cushion and which imparts impacts onto a cutting tool when held by the tool holder. And a crank mechanism, in accordance with the first aspect of the present invention by which the motor reciprocatingly drives the piston, wherein the motor is drivingly connected to the crank plate, the bearing is located and held within the recess and the crank pin is drivingly connected to the piston. The motor rotationally drives the crank plate which in turn results in the crank pin reciprocatingly driving the piston, characterised in that, the bearing remains in the recess within the locked in range of angles, as the crank pin reciprocatingly drives the piston. The crank pin can be drivingly connected to the piston in such a manner that its longitudinal axis extends in a perpendicular direction to the axis along which the piston slides. The crank plate may rotate about an axis which is perpendicular to the direction to the axis along which the piston slides. The crank plate may rotate about an axis which intersects the axis along which the piston slides. The crank may slidingly locate within a tubular passageway formed in the piston. The piston and ram may be mounted within a rotatable spindle. The piston maybe a hollow piston, the ram being slideably mounted within the hollow piston.

According to a third aspect of the present invention, there is provided a method of assembly of a crank mechanism according to any one of claims 1 to 10 for insertion tino the hammer comprising the steps of:
i) orientating the bearing to the at least one first orientation relative to the entrance;
ii) passing it through the entrance of the recess and locating it within the recess; and
iii) orientating the bearing to the at least one second orientation relative to the entrance whilst in the recess to is prevent from passing through the entrance and exiting the recess.

According to a fourth aspect of the present invention, there is provided a method of disassembly of a crank mechanism to any one of claims 1 to 10 when the bearing is orientated within recess in the at least second orientation comprising the steps of:
i) orientating the bearing to the at least first orientation relative to the entrance; and
ii) passing it through the entrance of the recess to remove it from the recess.

Such a design allows the removal of the spring 176 thereby avoiding a side ways force being applied to the piston. It also provides a mechanism which can be easily assembled.

Two embodiments will now be described with reference to accompanying drawings of which:
Figure 1 shows a vertical cross section of a hammer drill;
Figure 2 shows a vertical cross section of the crank plate with a fastening rivet and a crank pin located at a first angular position relative to the crank plate in accordance with the first embodiment of the present invention;
Figure 3 shows a vertical cross section of the crank plate of Figure 2 with the crank pin at a second angular position;
Figure 4 shows a top view of the crank plate of Figure 2 with the crank pin perpendicular to the crank plate;
Figure 5 shows a vertical cross section of the crank plate with a cup shaped recess according to a second embodiment of the present invention; and
Figures 6A and 6B show the semi spherical bearing located in the cup shape recess of the crank plate of Figure 5 at two different angles.

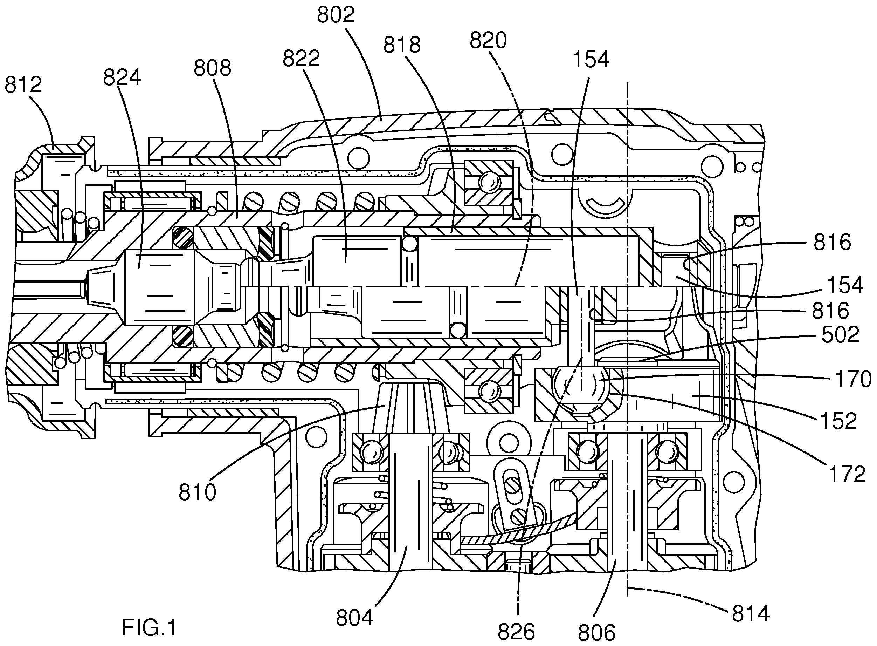

A first embodiment of the present invention will now be described with reference to Figures 1 to 4.

Referring to Figure 1, the hammer drill comprises a housing 802, a motor (not shown) which is cable of driving a first shaft 804, a second shaft 806, or both shafts. Rotation of the first shaft 804 results in rotation of a spindle 808 via a bevel gear 810. Rotation of the spindle 808, results in rotation of a tool holder 812 and any cutting tool held by it.

Rotation of the second shaft 806 results in rotation of a crank plate 152 rigidly mounted onto the top end of the shaft 806. The second shaft, together with the crank pate 152, rotates around its longitudinal axis 814. Formed in the top side of the crank plate 152 is a cup shaped recess 172 in a position located radially away from the axis of rotation 814 of the crank plate 152 and the shaft 806 so that the cup shaped recess 172 rotates around the axis 814 in well known manner. A crank pin 154 having a part spherical bearing 170 integrally formed on one end of the pin 154 engages with the crank plate 152 by the part spherical bearing 170 locating within the cup shaped recess 172. The pin 154 extends in a generally upward direction and engages in a tubular passageway 816 formed in a rear section of a hollow piston 818. The hollow piston 818 is mounted in an axially slideable manner within the spindle 808. The hollow piston 818 is also capable of freely rotating about the longitudinal axis 820 of the spindle 808 allowing relative rotational movement between the two. Mounted within the hollow piston 818, in a freely slideable manner, is a ram 822. Mounted within the spindle 808 forward of the ram 822 is a beat piece 824. The longitudinal axis 814 of the second shaft 806 is perpendicular to and intersects with the longitudinal axis 820 of the spindle 808.

The crank pin 154 can axially slide within the tubular passageway 816 as well as rotate about its longitudinal axis 826. Rotation of the crank plate 152 causes the cup shaped recess 172 and part spherical bearing 170 to rotate around longitudinal axis 814 of the second shaft 806 and crank plate 152. As it does so, the pin 154 is moved in a rearward and forward direction, the longitudinal axis 826 of the pin 154 being held constantly within a vertical plane which extends in a perpendicular direction to the longitudinal axis 820 of the spindle 808 by the position of the tubular passageway 816, which extends perpendicularly to longitudinal axis 820 of the spindle 808 and which can only rotate around the longitudinal axis 820 of the spindle 808 or axially slide within the spindle 808 together with the hollow piston 818. The rearward and forward movement of the crank pin 154 drives the piston 818 in a reciprocating manner within the spindle 808, the hollow piston 818 rotating within the spindle 808 as it does so to accommodate the circular movement of the part spherical baring 170 around the axis 814 of the second shaft 806. The reciprocating movement of the piston 818 is transferred into a reciprocating movement of the ram 822 via an air cushion which in turn repetitively strikes the rear of the beat piece 824. The beat piece 824 in turn repetitively strikes a cutting tool when held by the too holder 812.

It should be noted that in Figure 1, the drawing shows the piston 818 and ram 822 in their rearward positions above the longitudinal axis 820 of the spindle 808 and in their forward positions below the longitudinal axis 820.

The mechanism by which the part spherical bearing 170 is held within the cup shaped recess 172 and the method by which it is assembled will now be described.

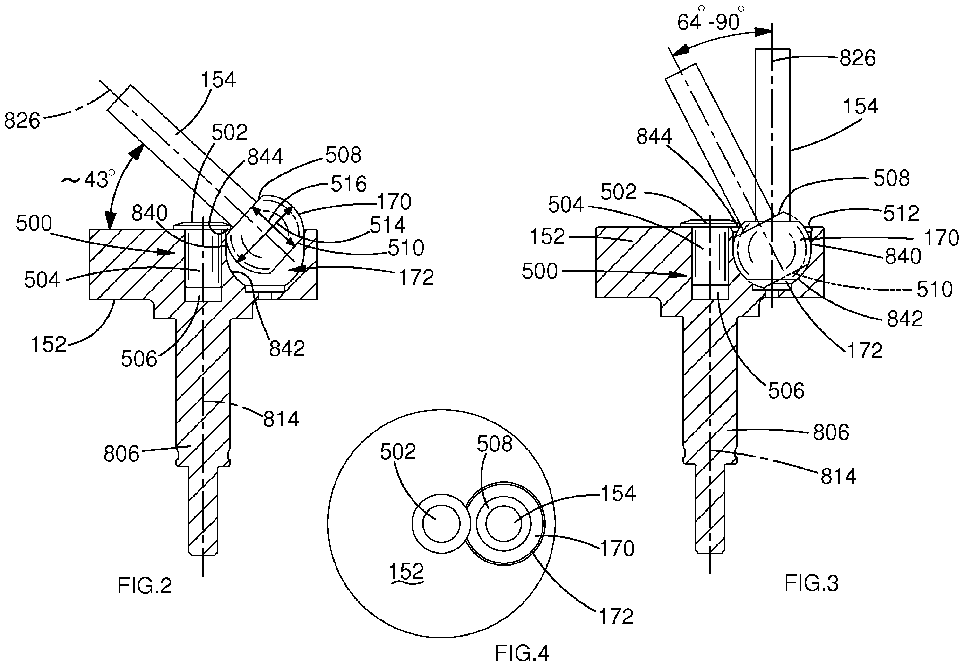

Referring to the Figures 2 to 4, the cup shaped recess 172 comprises an upper section 840 and a lower section 842. The upper section 840 is tubular with a circular cross section of uniform diameter. The upper section 840 provides a circular entrance 512 to the cup shape recess. The lower section 842 is semi spherical in shape with a diameter which is the same as that of the upper section.

The part spherical bearing 170 is spherical in shape around its sides with two flat surfaces 508, 510 formed on opposite sides of the bearing 170, one at the top, where the crank pin 154 attaches and extends from, and one at the bottom. The width 514 of the bearing 170 at its widest point is slightly smaller than the diameter of the upper section 840 of the cup shaped recess 172, including that of the entrance 512. The shape of the spherical sides of the bearing 170 corresponds to that of the lower section 842. As such, when the bearing 170 is located within the cup shaped recess 172, it can freely pivot within it.

There is provided a rivet 500. The rivet comprises a head 502 attached to a body 504 which is frictionally press fitted into a hole 506 formed centrally in the crank plate 152. The head 502 has a greater diameter than the body 504. When the body 504 is located in the hole 506, the edge of the head 502 extends sideways and over the edge of the entrance 512 of the cup shaped recess 172 to form a lip 844 which covers a small part of the entrance 512.

Because of the lip 844, the size of the opening 512 into the recess 172 is reduced. The width 514 of the bearing 170 at its widest point is slightly larger than the reduced size of the entrance 512. As such, when the bearing 170 is located in the recess 172 with the pin 154 extending generally vertically, the side of the bearing 170 locates below the lip 844 formed by the head 502 of the rivet (see Figure 3) and therefore is prevented from exiting the entrance 512. As such, the bearing 170 is held in the recess 172 by the lip 844 when the pin 154 extends generally vertically.

However, the dimensions of the flat surfaces 508, 510 are such that the height 516 of the bearing 170 is smaller than the reduced size of entrance 512 caused by the lip 844, allowing it to be inserted into the recess 172 when the bearing 170 is orientated in a generally sideways manner so that the flat surfaces 508, 510 can pass the lip 844 formed by the edge of the head 502 of rivet and enter the recess (as shown in Figure 2). Similarly, when orientated in a sideways manner, the bearing 170 is able to pass the lip 844and exit the recess 172. The range of angles of the part spherical bearing 170 and the longitudinal axis 826 of the crank pin 154 relative to the longitudinal axis of the shaft 806 at which the bearing 170 can pass the lip 844 to enter or exit the recess 172 is known as the entry range of angles. The range of angles of the part spherical bearing 170 and the longitudinal axis 826 of the crank pin 154 relative to the longitudinal axis of the shaft 806 at which the bearing 170 is prevented from passing the lip 844 to lock the bearing within the recess 172 is known as the locked in range of angles.

In order to assemble the bearing 170 into the recess 172 during the manufacture of the hammer drill, the bearing 170 is tilted so that the angle of the part spherical bearing 170 and the longitudinal axis 826 of the crank pin 154 relative to the longitudinal axis of the shaft 806 is within the entry range of angles with the side of the bearing having the smaller dimensions ("height") facing the entrance 512 and then the bearing 170 is inserted (Figure 1) into the cup shaped recess 172. It has been found that an angle of tilt of equal to or greater than 47 degrees (the entry range of angles) between the longitudinal axis 826 of the crank pin 154 and the longitudinal axis 814 of the second shaft 806 is a desirable range in which it is possible to insert the bearing 170 into the recess 172. The bearing 170 is then rotated in the recess 172 so the pin 154 extends in a more generally vertical direction within the locked in range of angles towards the hollow piston 58. The hammer drill is designed so that the bearing is always in the locked in range of angles when construction is complete. During the operation of the crank mechanism, the pin 154 tilts relative to the crank plate 152, the longitudinal axis 826 of the crank pin 154 pivoting relative to the longitudinal axis 814 of the second shaft 806 between the angles of 26 degrees to 0 degrees, and as such does not pivot sufficiently to exit the locked in range of angles and allow the bearing 170 to pass the lip 844 and therefore exit the recess 172.

A second embodiment will now be described with reference to Figures 5 and 6. Where the same features are present in the second embodiment, which were present in the first, the same reference numbers have been used. The second embodiment is the same as the fist except for the design of the crank plate 152 and cup shaped recess 172.

The cup shaped recess 172 comprises a single section 850 only. The section 850 is semi spherical in shape having a uniform diameter 854, the top portion of the section 850 forming the entrance 512. The shape of the spherical sides of the bearing 170, correspond to that of the section 850, the diameter of the spherical sides of the bearing 170 being slightly smaller to that of the section 850. As such, the bearing 170 can freely pivot within the recess 172.

Furthermore, the rivet of the first embodiment has been replaced by a projection 852 having a body 856 and a head 858 which is integrally formed with the crank plate 152. The head 502 has a greater diameter than the body 504 and extends sideways and over the edge of the entrance 512 of the cup shaped recess 172 to form a lip 844 which covers a small part of the entrance 512. The lip extends to a position where its edge is adjacent the line of curvature of the walls of semi spherical section of the cup shaped recess 172 as indicated by lines 860.

The semi spherical bearing 170 is inserted into the cup shape recess 172 in the same manner as in the first embodiment by tilting it sufficiently to pivot the part spherical bearing 170 and the longitudinal axis 826 of the crank pin 154 relative to the longitudinal axis of the shaft 806 into the entry range of angles in order to allow the flat sides of the bearing 170 to pass the lip 844, inserting the bearing 170 into the recess 172 and then to rotating it into the locked in range of angles so that it is prevented from exiting the recess 172. By ensuring that the lip 844 extends to a position where its edge is adjacent the line of curvature 860 of the walls of the semi spherical section 850 of the cup shaped recess 172, the bearing 170 is prevented from any linear movement within the recess 172 when it is locked within the recess 172 as the lip 844 would engage with the sides of the bearing 170, the bearing 170 only being able to pivot within the recess 172 as shown Figures 6A and 6B which shows the bearing 170 and crank pin 154 at two different angles within the locked in range of angles.

## Claims

1. A crank mechanism for a hammer drill comprising:
a crank plate (152) capable of being rotated about an axis of rotation (814), the crank plate (152) having a recess (172) formed within a surface of the crank plate (152), the recess having an entrance (512);
a crank pin (154) comprising a bearing (170) rigidly attached to one end of the crank pin (154), the bearing (170) being of sufficient size and shape relative to the size and shape of the recess (172) that it is able to be located and held within the recess (172) in a pivotal manner;
wherein the size and shape of the bearing (170) in relation to the size and shape of the entrance (512) is such that when the bearing (170) is in at least one first orientation relative to the entrance (512), it is able to pass through the entrance (512) of the recess (172) and locate within the recess (172) and, when the bearing (170) is located within the recess (172), and it is orientated to at least one second orientation relative to the entrance (512), it is prevented from passing through the entrance (512) and exiting the recess (172);
wherein the recess (172) comprises at least one first section (842; 850) which has a semi spherical shape; **characterised in that** there is a circular entry aperture (512) formed in the wall of the crank plate (152) into the section (842; 850); which has a semi spherical shape. wherein the crank plate (152) comprises a lip (844) which extends over the circular entry aperture (512) to form the entrance.

2. A crank mechanism as claimed in claim 1 wherein the bearing (170) is semi spherical in shape.

3. A crank mechanism as claimed in claim 2 wherein the bearing (170) has a flat surface (508) on its top and a flat surface (510) on it bottom.

4. A crank mechanism as claimed in any of the previous claims wherein the recess (172) further comprises at least one other second section (840) which is tubular in shape with a uniform circular cross section along its length and which connects to the first section (842) and has the same diameter as the first section (842).

5. A crank mechanism as claimed in claim 4 wherein the circular entry aperture (512) formed in the wall of the crank plate (152) enters into the at least one other second section (840).

6. A crank mechanism as claimed in any of the previous claims wherein the there is provided a rivet (500) mounted on the crank plate (152) having a head (502), part of the edge of the head (502) forming the lip (844).

7. A crank mechanism as claimed in any one of claims 1 to 5 wherein the lip (844) is integral with the crank plate (152).

8. A crank mechanism as claimed in any one of the previous claims wherein the lip (844) extends to a position where its edge is adjacent the line (860) of curvature of the wall of the first section (850).

9. A crank mechanism as claimed in any one of the previous claims wherein the bearing (170) is prevented from moving in a linear direction when the bearing (170) is located and held within the recess (172).

10. A crank mechanism of any of the previous claims wherein the bearing (170) can be orientated within an entry range of angles within which it is able to pass through the entrance (512) and locate within the recess (172) and when the bearing is located within the recess (172), the bearing (170) can be orientated within a locked in range of angles within which it is prevented from passing through the entrance (512) and exiting the recess (172).

11. A hammer drill comprising:
a housing (802);
a tool holder capable of holding a cutting tool;
a motor mounted within the housing (802);
a piston (818) mounted in an axially slideable manner within the housing (802) and which is capable of being reciprocatingly driven by the motor along an axis (820);
a ram (822) mounted in axially slideable manner within the housing (802), the ram (822) being reciprocatingly driven by the reciprocating piston (818) via an air cushion and which imparts impacts onto a cutting tool when held by the tool holder;
and a crank mechanism according to any of the previous claims by which the motor reciprocatingly drives the piston (818); wherein
the motor is drivingly connected the crank plate (152);
the bearing (170) is located and held within the recess (172); and
the crank pin (154) is drivingly connected to the piston (818);
wherein the motor rotationally drives the crank plate (152) which in turn results in the crank pin (154) reciprocatingly driving the piston (818);
**characterised in that** the bearing (170) remains in the recess (172) within the locked in range of angles as the crank pin (154) reciprocatingly drives the piston (818).

12. A method of assembly of a crank mechanism according to any one of claims 1 to 10 for insertion into a hammer comprising the steps of:
i) orientating the bearing (170) to the at least one first orientation relative to the entrance (512);
ii) passing it through the entrance (512) of the recess (172) and locating it within the recess (172); and
iii) orientating the bearing (170) to the at least one second orientation relative to the entrance (512) whilst in the recess (172) to is prevented from passing through the entrance (512) and exiting the recess (172).

13. A method of disassembly of a crank mechanism to any one of claims 1 to 10 when the bearing (170) is orientated within recess (172) in the at least second orientation comprising the steps of:
i) orientating the bearing (170) to the at least first orientation relative to the entrance (512); and
ii) passing it through the entrance (512) of the recess (172) to remove it from the recess (172).

## Patentansprüche

1. Kurbelmechanismus für einen Bohrhammer, umfassend:
eine Kurbelplatte (152), die in der Lage ist, um eine Drehachse (814) gedreht zu werden, wobei die Kurbelplatte (152) eine Aussparung (172) aufweist, die innerhalb einer Oberfläche der Kurbelplatte (152) gebildet ist, wobei die Aussparung einen Eingang (512) aufweist;
einen Kurbelzapfen (154), umfassend ein Lager (170), das an einem Ende des Kurbelzapfens (154) starr befestigt ist, wobei das Lager (170) relativ zu der Größe und Form der Aussparung (172) von ausreichender Größe und Form ist, um innerhalb der Aussparung (172) befindlich sein und auf schwenkbare Weise gehalten werden zu können;
wobei die Größe und Form des Lagers (170) im Vergleich zu der Größe und Form des Eingangs (512) derart ist, dass das Lager (170), wenn es in wenigstens einer ersten Orientierung relativ zu dem Eingang (512) ist, in der Lage ist, durch den Eingang (512) der Aussparung (172) hindurch zu gelangen, und innerhalb der Aussparung (172) befindlich zu sein, und das Lager (170), wenn es sich innerhalb der Aussparung (172) befindet, und zu wenigstens einer zweiten Orientierung relativ zu dem Eingang (512) orientiert ist, daran gehindert wird, durch den Eingang (512) hindurch zu gelangen und aus der Aussparung (172) auszutreten;
wobei die Aussparung (172) wenigstens eine erste Sektion (842; 850) umfasst, die eine halbkugelförmige Form aufweist;
**dadurch gekennzeichnet, dass**
eine kreisförmige Eintrittsmündung (512) in der Wand der Kurbelplatte (152) in die Sektion (842; 850) hinein gebildet ist, die eine halbkugelförmige Form aufweist,
wobei die Kurbelplatte (152) eine Lippe (844) umfasst, die sich über die kreisförmige Eintrittsmündung (512) erstreckt, um den Eingang zu bilden.

2. Kurbelmechanismus nach Anspruch 1, wobei das Lager (170) eine halbkugelförmige Form aufweist.

3. Kurbelmechanismus nach Anspruch 2, wobei das Lager (170) eine flache Oberfläche (508) auf seiner Oberseite und eine flache Oberfläche (510) auf seiner Unterseite aufweist.

4. Kurbelmechanismus nach einem der vorstehenden Ansprüche, wobei die Aussparung (172) weiter wenigstens eine weitere zweite Sektion (840) umfasst, die rohrförmig mit einem einheitlichen kreisförmigen Querschnitt entlang ihrer Länge ist, und die mit der ersten Sektion (842) verbindbar ist und denselben Durchmesser hat wie die erste Sektion (842).

5. Kurbelmechanismus nach Anspruch 4, wobei die in der Wand der Kurbelplatte (152) gebildete kreisförmige Eintrittsmündung (512) in die wenigstens eine weitere zweite Sektion (840) eintritt.

6. Kurbelmechanismus nach einem der vorstehenden Ansprüche, wobei eine auf der Kurbelplatte (152) montierte Niete (500) bereitgestellt ist, die einen Kopf (502) aufweist, wobei ein Teil der Kante des Kopfs (502) die Lippe (844) bildet.

7. Kurbelmechanismus nach einem der Ansprüche 1 bis 5, wobei die Lippe (844) einstückig mit der Kurbelplatte (152) ist.

8. Kurbelmechanismus nach einem der vorstehenden Ansprüche, wobei die Lippe (844) sich zu einer Position erstreckt, an der ihre Kante benachbart zu der Krümmungslinie (860) der Wand der ersten Sektion (850) ist.

9. Kurbelmechanismus nach einem der vorstehenden Ansprüche, wobei das Lager (170) daran gehindert wird, sich in eine lineare Richtung zu bewegen, wenn das Lager (170) sich innerhalb der Aussparung (172) befindet und dort gehalten wird.

10. Kurbelmechanismus nach einem der vorstehenden Ansprüche, wobei das Lager (170) innerhalb eines Eintrittsbereichs von Winkeln orientiert werden kann, innerhalb dessen es durch den Eingang (512) gelangen und sich innerhalb der Aussparung (172) befinden kann, und wenn das Lager sich innerhalb der Aussparung (172) befindet, das Lager (170) innerhalb eines gesperrten Bereichs von Winkeln orientiert werden kann, innerhalb dessen es daran gehindert wird, durch den Eingang (512) zu gelangen und aus der Aussparung (172) auszutreten.

11. Bohrhammer, umfassend:
ein Gehäuse (802);
eine Werkzeughalterung, die ein Scheidwerkzeug halten kann;
einen innerhalb des Gehäuses (802) montierten Motor;
einen Kolben (818), der auf eine axial verschiebbare Weise innerhalb des Gehäuses (802) montiert ist, und der in der Lage ist, reziprok von dem Motor entlang einer Achse (820) angetrieben zu werden;
einen Bock (822), der auf eine axial verschiebbare Weise innerhalb des Gehäuses (802) montiert ist, wobei der Bock (822) mittels eines Luftkissens reziprok von dem sich reziprok bewegenden Kolben (818) angetrieben wird, das Stöße auf ein Schneidwerkzeug aufprägt, wenn dieses von der Werkzeughalterung gehalten wird;
einen Kurbelmechanismus nach einem der vorstehenden Ansprüche, durch welchen der Motor den Kolben (818) reziprok antreibt; wobei
der Motor antreibend mit der Kurbelplatte (152) verbunden ist;
das Lager (170) sich innerhalb der Aussparung (152) befindet und dort gehalten wird; und
der Kurbelzapfen (154) antreibend mit dem Kolben (818) verbunden ist;
wobei der Motor die Kurbelplatte (152) drehend antreibt, was wiederum dazu führt, dass der Kurbelzapfen (154) den Kolben (818) reziprok antreibt;
**dadurch gekennzeichnet, dass** das Lager (170) in der Aussparung (172) innerhalb des gesperrten Bereichs von Winkeln verbleibt, während der Kurbelzapfen (154) den Kolben (818) reziprok antreibt.

12. Verfahren zum Zusammenbau eines Kurbelmechanismus nach einem der Ansprüche 1 bis 10 zum Einsetzen in einen Hammer, umfassend die folgenden Schritte:
i) Orientieren des Lagers (170) zu der wenigstens einen ersten Orientierung relativ zu dem Eingang (512);
ii) Hindurchgeben desselben durch den Eingang (512) der Aussparung (172) und Platzieren desselben innerhalb der Aussparung (172); und
iii) Orientieren des Lagers (170) zu der wenigstens einen zweiten Orientierung relativ zu dem Eingang (512), während es in der Aussparung (172) daran gehindert wird, durch den Eingang (512) zu gelangen und aus der Aussparung (172) auszutreten.

13. Verfahren zum Auseinanderbau eines Kurbelmechanismus nach einem der Ansprüche 1 bis 10, wenn das Lager (170) innerhalb der Aussparung (172) in der wenigstens zweiten Orientierung orientiert ist, umfassend die folgenden Schritte:
i) Orientieren des Lagers (170) zu der wenigstens ersten Orientierung relativ zu dem Eingang (512); und
ii) Hindurchgeben desselben durch den Eingang (512) der Aussparung (172), um es aus der Aussparung (172) zu entfernen.

## Revendications

1. Mécanisme de manivelle pour une perceuse à percussion, comprenant :
une plaque de manivelle (152) capable d'être tournée autour d'un axe de rotation (814), la plaque de manivelle (152) possédant un évidement (172) formé à l'intérieur d'une surface de la plaque de manivelle (152), l'évidement possédant une entrée (512) ;
un maneton de manivelle (154) comprenant un palier (170) rigidement attaché à une extrémité du maneton de manivelle (154), le palier (170) étant de taille et de forme suffisantes, relativement à la taille et la forme de l'évidement (172), pour qu'il soit capable d'être positionné et maintenu à l'intérieur de l'évidement (172) de manière pivotante ;
dans lequel la taille et la forme du palier (170) par rapport à la taille et la forme de l'entrée (512) sont telles que, lorsque le palier (170) est dans au moins une première orientation relativement à l'entrée (512), il est capable de passer à travers l'entrée (512) de l'évidement (172) et de se positionner à l'intérieur de l'évidement (172) et, lorsque le palier (170) est positionné à l'intérieur de l'évidement (172), et qu'il est orienté vers au moins une seconde orientation relativement à l'entrée (512), il est empêché de passer à travers l'entrée (512) et de sortir de l'évidement (172) ;
dans lequel l'évidement (172) comprend au moins une première section (842 ; 850) qui présente une forme hémisphérique ;
**caractérisé en ce que**
il y a une ouverture d'entrée circulaire (512) formée dans la paroi de la plaque de manivelle (152) dans la section (842 ; 850) ; qui présente une forme hémisphérique,
dans lequel la plaque de manivelle (152) comprend une lèvre (844) qui s'étend sur l'ouverture d'entrée circulaire (512) pour former l'entrée.

2. Mécanisme de manivelle selon la revendication 1, dans lequel le palier (170) est de forme hémisphérique.

3. Mécanisme de manivelle selon la revendication 2, dans lequel le palier (170) possède une surface plate (508) sur sa partie supérieure et une surface plate (510) sur sa partie inférieure.

4. Mécanisme de manivelle selon l'une quelconque des revendications précédentes, dans lequel l'évidement (172) comprend en outre au moins une autre seconde section (840) qui est de forme tubulaire avec une section transversale circulaire uniforme le long de sa longueur et qui se raccorde à la première section (842) et possède le même diamètre que la première section (842).

5. Mécanisme de manivelle selon la revendication 4, dans lequel l'ouverture d'entrée circulaire (512) formée dans la paroi de la plaque de manivelle (152) entre dans l'au moins une autre seconde section (840).

6. Mécanisme de manivelle selon l'une quelconque des revendications précédentes, dans lequel il est prévu un rivet (500) monté sur la plaque de manivelle (152) possédant une tête (502), une partie du bord de la tête (502) formant la lèvre (844).

7. Mécanisme de manivelle selon l'une quelconque des revendications 1 à 5, dans lequel la lèvre (844) est monobloc avec la plaque de manivelle (152).

8. Mécanisme de manivelle selon l'une quelconque des revendications précédentes, dans lequel la lèvre (844) s'étend vers une position où son bord est adjacent à la ligne (860) de courbure de la paroi de la première section (850).

9. Mécanisme de manivelle selon l'une quelconque des revendications précédentes, dans lequel le palier (170) est empêché de se déplacer dans une direction linéaire lorsque le palier (170) est positionné et maintenu à l'intérieur de l'évidement (172).

10. Mécanisme de manivelle selon l'une quelconque des revendications précédentes, dans lequel le palier (170) peut être orienté au sein d'une plage d'entrée d'angles au sein de laquelle il est capable de passer à travers l'entrée (512) et de se positionner à l'intérieur de l'évidement (172) et, lorsque le palier est positionné à l'intérieur de l'évidement (172), le palier (170) peut être orienté au sein d'une plage bloquée d'angles au sein de laquelle il est empêché de passer à travers l'entrée (512) et de sortir de l'évidement (172).

11. Perceuse à percussion, comprenant :
un boîtier (802) ;
un porte-outil capable de supporter un outil de coupe ;
un moteur monté à l'intérieur du boîtier (802) ;
un piston (818) monté de manière axialement coulissante à l'intérieur du boîtier (802) et qui est capable d'être entraîné en va-et-vient par le moteur le long d'un axe (820) ;
un vérin (822) monté de manière axialement coulissante à l'intérieur du boîtier (802), le vérin (822) étant entraîné en va-et-vient par le piston se déplaçant en va-et-vient (818) par l'intermédiaire d'un amortisseur pneumatique et qui transmet des impacts sur un outil de coupe lorsqu'il est supporté par le porte-outil ;
et un mécanisme de manivelle selon l'une quelconque des revendications précédentes par l'intermédiaire duquel le moteur entraîne en va-et-vient le piston (818) ; dans lequel
le moteur est raccordé de façon entraînante à la plaque de manivelle (152) ;
le palier (170) est positionné et maintenu à l'intérieur de l'évidement (172) ; et
le maneton de manivelle (154) est raccordé de façon entraînante au piston (818) ;
dans lequel le moteur entraîne de façon rotationnelle la plaque de manivelle (152) ce qui à son tour a pour résultat que le maneton de manivelle (154) entraîne le piston (818) en va-et-vient ;
**caractérisé en ce que** le palier (170) reste dans l'évidement (172) au sein de la plage bloquée d'angles lorsque le maneton de manivelle (154) entraîne le piston (818) en va-et-vient.

12. Procédé d'assemblage d'un mécanisme de manivelle selon l'une quelconque des revendications 1 à 10 pour une insertion dans un marteau, comprenant les étapes de :
i) l'orientation du palier (170) vers l'au moins une première orientation relativement à l'entrée (512) ;
ii) son passage à travers l'entrée (512) de l'évidement (172) et son positionnement à l'intérieur de l'évidement (172) ; et
iii) l'orientation du palier (170) vers l'au moins une seconde orientation relativement à l'entrée (512) alors qu'il est dans l'évidement (172) pour être empêché de passer à travers l'entrée (512) et de sortir de l'évidement (172).

13. Procédé de désassemblage d'un mécanisme de manivelle selon l'une quelconque des revendications 1 à 10 lorsque le palier (170) est orienté à l'intérieur d'un évidement (172) dans l'au moins seconde orientation, comprenant les étapes de :
i) l'orientation du palier (170) vers l'au moins première orientation relativement à l'entrée (512) ; et
ii) son passage à travers l'entrée (512) de l'évidement (172) pour l'enlever de l'évidement (172).
